# EUROPEAN PATENT SPECIFICATION

(11) **EP 4 309 136 B1**
(45) Date of publication and mention of the grant of the patent: **06.08.2025**
(21) Application number: 22707740.1
(22) Date of filing: 24.02.2022
(51) Int. Cl.: G06T 7/00, G06T 7/13, G06V 10/143, G06V 10/44, G06V 20/10

(54) **METHOD AND DEVICE FOR DETERMINATION OF TIRE CONDITION**
VERFAHREN UND VORRICHTUNG ZUR BESTIMMUNG DES REIFENZUSTANDS
PROCÉDÉ ET DISPOSITIF DE DÉTERMINATION DE L'ÉTAT D'UN PNEU

(30) Priority: 16.03.2021 EP 21162947
(43) Date of publication of application: 24.01.2024
(73) Proprietor: Sony Group Corporation, Tokyo 108-0075 (JP); Sony Europe B.V., Weybridge, Surrey KT13 0XW (GB)
(72) Inventor: GATTO, Alexander, 70327 Stuttgart (DE); MUELLER, Ralf, 70327 Stuttgart (DE)
(74) Representative: 2SPL Patentanwälte PartG mbB
(86) International application number: PCT/EP2022/054684
(87) International publication number: WO 2022/194512

(56) References cited:
- US-A1- 2016 307 313
- US-B2- 10 068 322
- US-B2- 9 002 093

## Description

### Field

The present disclosure relates to a method and device for determining the condition of a tire.

### Background

Vehicle safety and performance is influenced by tire condition. Also, tire condition may be subject to legally regulation to increase traffic safety. It is desirable to design methods and devices for determining tire condition, such as to improve traffic safety. Traffic safety can be improved by providing an alert when a tire condition is poor, such as if the tread depth does not meet a legal requirement.

Document US 10 068 322 B2 relates to a system for inspecting an object, such as a tire. The system comprises a radiation imaging system configured to examine the object via radiation to generate a radiation image depicting an interior aspect of the object and a machine vision system configured to measure visible light and/or infrared wavelengths to generate a vision image depicting an exterior aspect of the object.

Document US 9 002093 B2 relates to a method for detecting an anomaly on the surface of a tire. The image of a given anomaly present on the surface of at least one tire is produced. With the aid of a collection of filters, a multivariate image of the said surface is constructed in a space of the filters, in which each pixel is represented in the form of a pixel vector, the components of each pixel vector having a value corresponding to the value of this pixel in the image transformed with the aid of each of the filters of the said collection. With the aid of a linear function, this multivariate image is transformed from the space of the filters into a spectral space of given dimension whose variables are the filters or combinations of filters of the said collection, so as to form a spectral image. A classifier is constructed by determining, for this anomaly, those zones representative of the spectral space which contain, in a statistically representative manner, the points of the spectral image of the said anomaly transformed into the said spectral space.

Document US 2016/073313 A1 relates to a tire inspection method. The method includes capturing a transmission image of a tire including a steel chafer at a bead portion. Further, the method includes generating an image at an inspection device from the captured image of a full revolution of the tire with the steel chafer portions extracted using a spatial filter generated in accordance with an incline of the wires of the steel chafer. The method includes detecting a locus of a front side edge and a back side edge of the steel chafer. In addition, the method includes generating an image from the captured image with the steel chafer portions removed. The method further includes detecting a locus of a turned-up edge of a carcass from this image and determining at the inspection device the position of the carcass to be appropriate or not on the basis of the locus of the turned-up edge of the carcass.

### Summary

In view of the technical challenges in determining tire condition, herein is disclosed a method of determining tire condition as defined in independent claim 1. A device for sensing a tire is defined in independent claim 5. Further advantages are provided by the subject matter defined in the dependent claims.

### Brief description of the Figures

Some examples of apparatuses and/or methods will be described in the following by way of example only, and with reference to the accompanying figures, in which:
Fig. 1 illustrates a method of determining tire condition, according to embodiments described herein;
Fig. 2 illustrates a device for sensing a tire, according to embodiments described herein;
Fig. 3 shows a tire, according to embodiments described herein;
Fig. 4 shows images, according to embodiments described herein;
Fig. 5 illustrates processing of a TOF image, according to embodiments described herein;
Fig. 6 illustrates TOF images, according to embodiments described herein;
Fig. 7 illustrates TOF images, according to embodiments described herein;
Fig. 8 illustrates a data table, according to embodiments described herein;
Fig. 9 illustrates a graph, according to embodiments described herein;
Fig. 10 illustrates a device for determining a tire condition, according to embodiments described herein;
Fig. 11 illustrates a block diagram, according to embodiments described herein;
Fig. 12 illustrates a block diagram, according to embodiments described herein.

### Detailed Description

Various examples will now be described more fully with reference to the accompanying drawings in which some examples are illustrated. The figures are not necessarily to scale.

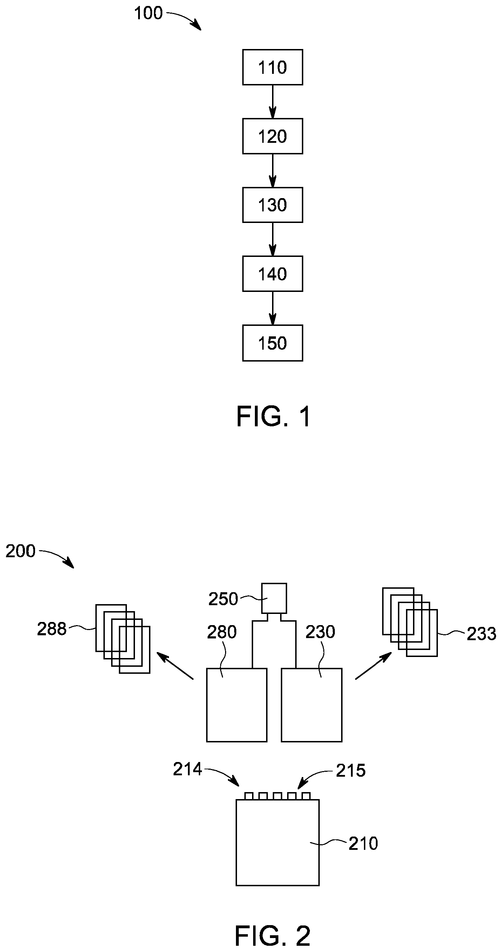

Fig. 1 illustrates a method 100 of determining tire condition. The method 100 includes collecting 110 multispectral data of a primary area of a tire with a multispectral camera, and determining 120 a secondary area of the primary area based on the multispectral data. The method 100 may involve determining characteristics of regions of the tire using the multispectral camera, and limiting the tire condition determination to certain regions of the tire, such as by excluding regions of the tire from the assessment. To enable limiting the tire condition determination to certain regions of the tire may help improve the accuracy of the tire condition determination. For example, it can be desirable to determine a region of the tire that is free of debris for the determination of the condition of the tire, particularly when debris can be detected.

Fig. 2 illustrates a device 200 for determining a condition of a tire 210. The device can include a multispectral camera 280, a time-of-flight sensor 230, and a processor 250 which is communicatively coupled to the multispectral camera 280 and the TOF sensor 230. The processor is configured to determine a tire condition, such as in a manner described herein.

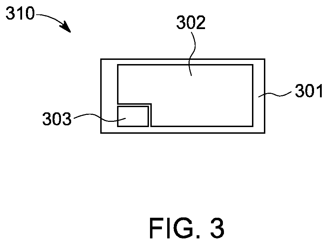

Fig. 3 illustrates a tire 310 and shows a primary area 301, secondary area 302, and exceptional region 303. The exceptional region 303 may be a region that is coated with debris, which may be ignored in determining the tire condition. Multispectral data 288 collected 110 by the multispectral camera 280 may be used to determine the secondary area 302 and/or exceptional region 303 of the tire 310. Multispectral data 288 may be particularly effective at aiding the determination/identification of a tire surface and/or debris or other material that might interfere with the determination of tire condition.

In a method 100 of determining tire condition, such as is illustrated in Fig. 1, the secondary area 302 can be determined 120 based on multispectral data 288 that is collected with the multispectral camera 280. Multispectral data 288 of the primary area 301 may be used to determine the secondary area 302 and/or exceptional area 303. For example, the secondary area 302 may be determined 120 such that the exceptional region 303 of the tire 310 is not included in the secondary area 302. Alternatively/additionally, determining the secondary area 302 can be based on a detection of a tire surface 214, *e.g.* an exposed tire surface. An exposed tire surface may be one that is not identified based on the multispectral data 288 as being an exceptional region 303, *e.g.* covered with debris. Debris, for example, may hinder determination of tire condition, such as tread depth 215.

Time-of-flight images 233 can be collected 130 from the primary area 301 and/or secondary area 302 by the TOF camera 230. For example, the TOF camera 230 can collect TOF images 233 after the secondary area 302 is determined 302. The multispectral data 288 may allow the determination of the secondary area 302 and/or exceptional region 303 such that the collection of TOF images 233 is from the secondary area 303, *e.g.* excluding the exceptional region 303.

The TOF images 233 can be used to determine tire condition, such as tread depth 215, particularly by processing, such as edge filtering the TOF images 233, such as with a processor 250. A plurality of edge maps can be determined 140 by edge filtering the TOF images of the primary and/or secondary area 301, 302. The condition of the tire's secondary area 302 can be determined 150 based the plurality of edge maps. Edge maps may be a particularly useful format of data for determination of tire condition, such as tread depth.

Edge maps may be particularly sensitive to determining the presence of tire tread and/or quantifying the depth and/or areal density of tread.

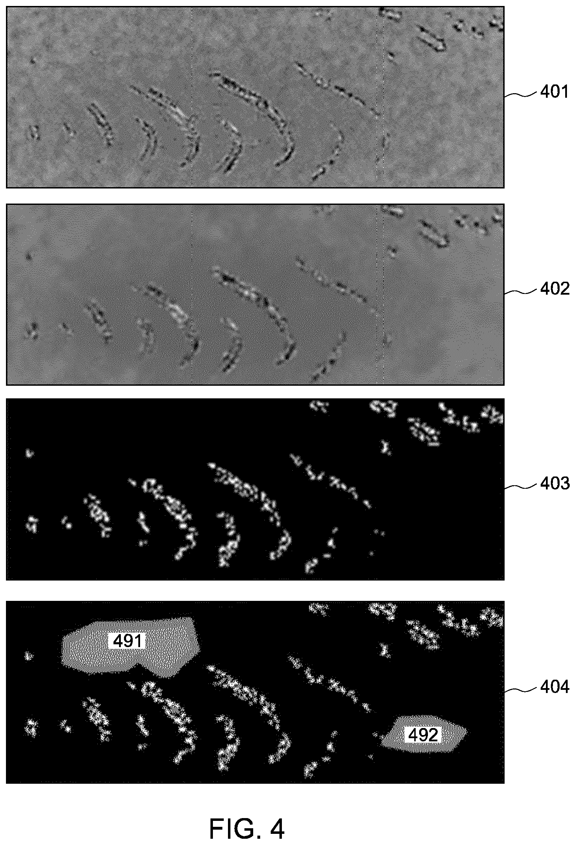

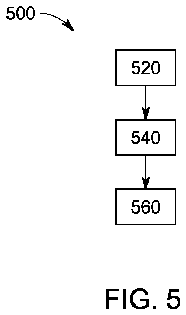

Figs. 4 and 5 aid in the illustration of processing 500 of a TOF image 401. The processing 500 of a TOF image 401 can include at least one of noise reduction 520, edge filtering 540, and masking 560. Fig. 4 illustrates a TOF image 401, a smoothed TOF image 402 after noise reduction, and an edge map 403. A masked TOF image 404 is also illustrated in Fig. 4. The masked TOF image 404 shows an example with an exceptional region of two parts 491, 492, which may be regarded as first and second exceptional regions. Masking may aid in allowing the method to ignore debris and the like from the accurate determination of tire condition.

Noise reduction 520 of a TOF image 401 can generate a smoothed TOF image 402. A TOF image, such as an original or smoothed TOF image 401, 402 can be edge filtered 140, 540 to determine an edge map 403. Noise reduction can reduce spurious identification/determination of edges, and may allow for accurate determination of tire condition.

Processing 500 of the TOF images 401 may optionally include masking 560. Any of the original TOF image 401, smoothed TOF image 402, and edge map 403 can be masked 560. Masking 560 may allow an exceptional region 303 to be ignored in the determination of tire condition 150. Alternatively/additionally, masking 560 may allow for the secondary area 302 to be used for the determination of tire condition 150. Masking 560 may be done after the exceptional region 303 is determined based on the multispectral data of the primary region 301. Masking 560 can be done when the TOF images 401, 233 that are collected 130 are of the primary area 301, including the exceptional region 303. Masking of the primary area 301 may determine the second area 302.

The exceptional region 303 can be ignored by exclusion filtering, *e.g*. masking 560, any of the TOF images 401, 233, smoothed TOF images 402, and edge maps 403. The exclusion filtering, *e.g*. masking 560, may exclude the exceptional region 303 before determining the tire condition 150.

When the TOF images 401, 233 are collected, they may be collected from the secondary area 302 such that the secondary area 302 of the tire 310, 210 and the exceptional region 303 are nonoverlapping. The collected TOF images 401, 233 may possibly be done after the secondary region 302 is determined 120 and the TOF images which are collected limited to the secondary area 301. By limiting the TOF images to the secondary area, it may be possible to forgo subsequent masking when evaluating the edge maps for tire condition.

The TOF image 401, 233 can be collected from the secondary area 302 such that the exceptional region 303 is excluded from each of the TOF images 401, 233.

The edge maps 403 may be binary images, *e.g*. each pixel of the edge map can be one bit, such as a bit which indicates detection of an edge by the edge filter. For example, in an edge map 403 determined from a TOF image 401, each pixel with a bit of value 0 corresponds to a position where no edge is detected, and pixel with a bit value of 1 corresponds to a position where an edge is detected. Each pixel of each edge map 403 can correspond to a pixel of a corresponding TOF image 401, such that the respective edge map pixels and TOF pixels correspond to the same position, region, and/or area of the tire. Binary edge maps may reduce the computational load and allow for efficient determination of tire condition.

Edge filtering 140, 540 TOF images 401, 233 can include determining binary edge maps 403.

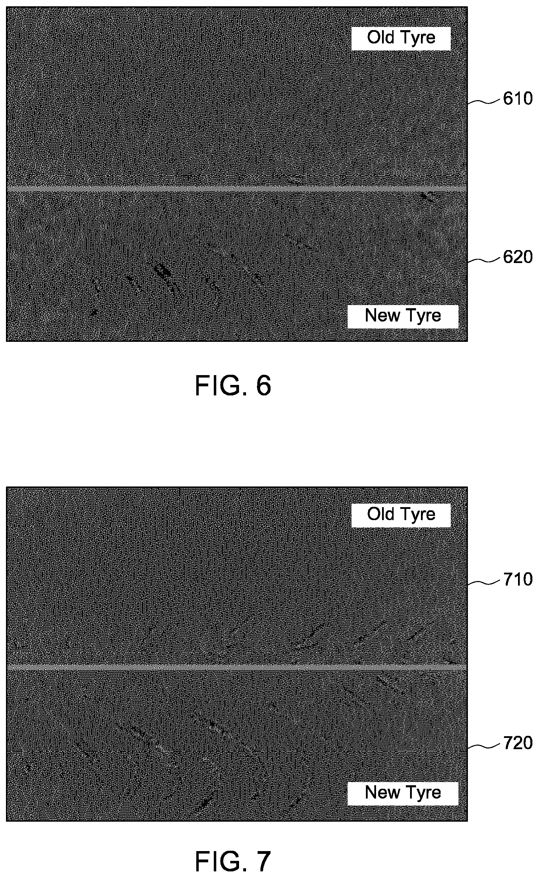

Fig. 6 illustrates TOF images 610, 620. A TOF image of an old tire 610 is shown on the top and a TOF image of a new tire 620 is shown on the bottom. Each of the TOF images of Fig. 6 were taken with an exposure time of 2 ms. Fig. 6 shows that, for an exposure time of 2 ms, there are tread features/edges determinable in the new tire, and fewer or no tread features/edge are determinable in the old tire.

Fig. 7 illustrates TOF images 710, 720. A TOF image of an old tire 710 is shown on the top and a TOF image of a new tire 720 is shown on the bottom. Each of the TOF images of Fig. 7 were taken with an exposure time of 5 ms, Fig. 7 shows that there are tread features/edges determinable in the new tire, and fewer tread features/edges are observable in the old tire.

Comparing Fig. 6 and Fig. 7, it can be seen that more tread features/edges can be determined in the longer exposure time image than the shorter exposure time image.

In the method of determining tire condition 100 as described herein, it is possible to collect each of the plurality of TOF images 233 at respective exposure times of a plurality of exposure times. For example, a first TOF image is collected at a first exposure time, and a second TOF image is collected at a second exposure time, and so on, for example, to an Nth TOF image collected at an Nth exposure time. The second exposure time can be greater than the first. In an example, for k ranging from 1 to N, the k+1^{st} TOF image can be taken at a longer exposure time than the k^{th}.

The determination 150 of the tire condition can include determining a tread measure, such as an edge count, based on the edge maps 403 and exposure times. The edge count can be the number of pixels of the secondary area 302 which are determined to be an edge after edge filtering. An edge count can be determined by counting the edge pixels of each edge map 403, the edge pixels each corresponding to an edge detection by the edge filtering 140. For example, the number of pixels which detected edges, *e.g.* bright pixels, of an edge map 403 can be summed to determine the edge count of the edge map 403. The edge count can be limited to the secondary area 302.

The determination 150 of the tire condition can include determining a plurality of edge counts of a plurality of edge maps 403 determined from TOF images 401 at a range of exposure times. Each edge count of an edge map 403 can be determined for a given tire from which has been determined a plurality of edge maps 403 taken at a range of exposure times.

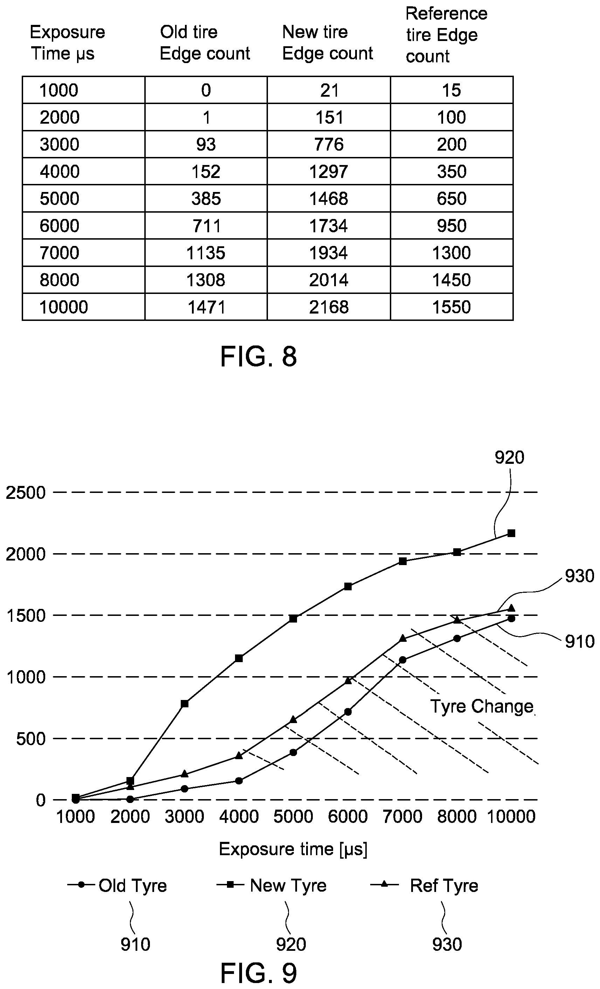

Fig. 8 is a data table. The data table shows, for varying exposure times of from 600 µs to 10 ms, edge counts based on respective edge maps 403 of an old tire, a new tire, and a reference tire. The first column of Fig. 8 shows exposure time in microseconds. The other columns are edge counts of edge maps 403 for an old tire, new tire, and a reference tire. A trend observable in Fig. 8 is that, for each kind of tire, as the exposure time increases, the edge count increases. From Fig. 8 it is also inferred that, at a given exposure time, the old tire has fewer edge counts than the new tire.

It is possible to use the edge counts of edge maps to determine tire condition, such as a tread depth 215. The edge count can be limited to the secondary aera 302 in determining tire condition.

Fig. 9 is a graph of edge counts for different types of tires versus exposure time. The data of Fig. 8 is used to make Fig. 9. Edge count is on the vertical axis of Fig. 9 and exposure time is on the horizontal axis. Lines connect data for each tire type: old 910, new 920, and reference 930. Fig. 9 shows that the edge count data of the old tire type is below that of the reference, and also shows that the new tire type edge count data is above that of the reference.

Fig. 9 also indicates a region of the graph where a tire change is suggested, *e.g*. where the edge count(s) is below a reference edge count(s). In the example of Fig. 9, the old tire 910 is determined to be in condition for changing, *e.g.* of having a tread depth below a threshold depth.

The determination 100 of tire condition can include collecting each of the plurality of TOF images at respective exposure times; determine 140, respectively, a plurality of edge maps 403 from the TOF images 401; and determine, respectively, a plurality of edge counts which each correspond to a respective exposure time. The edge counts can be determined by counting the edge pixels of each edge map, the edge pixels each corresponding to an edge detection by the edge filtering. The determination of tire condition 150 of the secondary area 302 of the tire 310, which is based on the plurality of edge maps 401, can also be based on the exposure times.

Determining multiple edge counts from multiple TOF images taken across a range of exposure times may reduce uncertainty in the determination of tire condition.

It is possible to determine a tread measure, such as tread depth 215, based on the edge maps 403 and the exposure times which includes: determining a plurality of edge counts, each edge count corresponding to a respective exposure time. The tread measure, such as tread depth 215, can be determined by counting the edge pixels of each edge map 403, the edge pixels each corresponding to an edge detection by the edge filtering 140. For example, the determination 150 of the tire condition of the secondary area 302 can include comparing the edge count to a reference edge count for each exposure time.

The edge count and reference edge count can include data determined from TOF images 401 taken at several exposure times in a range of exposure times. For example, an edge count above the reference edge count is indicative of a usable tire. If the edge count is below the reference edge count, the tire can be determined to be in condition for replacement, for example. The edge count can be compared to the reference edge count at multiple different exposure times in a range. Comparing the edge counts from multiple acquisitions at different exposure times may reduce uncertainty in the determination of tire condition.

It is possible to adjust the reference edge count, for example, based on the area of the exceptional region 303 and/or the area of the secondary area 302. For example, if debris is detected by the multispectral camera, then the reference edge count or curve can be adapted accordingly to the amount of covered tire surface. For example, if 20% of the primary area is covered by dirt then the reference curve and/or or reference edge count can be reduced by 20%.

Alternatively/additionally, herein, the edge count and/or reference edge count may be determined as counts per unit area. The edge count and/or reference edge count can be adjusted based on the area of the exceptional region 303 and/or the area of the secondary area 302. A plurality of reference edge counts, each reference edge count corresponding to an exposure time can be used in a determination of tire condition.

For example, when edge count is less than the reference edge count for a range of exposure times, a tire change is indicated. For example, when each of at least half the edge counts is less than the corresponding reference edge count at the corresponding exposure time, a tire change is indicated. Threshold reference edge count(s) can be determined by alternative/additional means. Being below the threshold can trigger an alert to the user/driver, such as to suggest a tire change.

When the edge count(s) is lower than the reference edge count(s), the user/driver can be alerted.

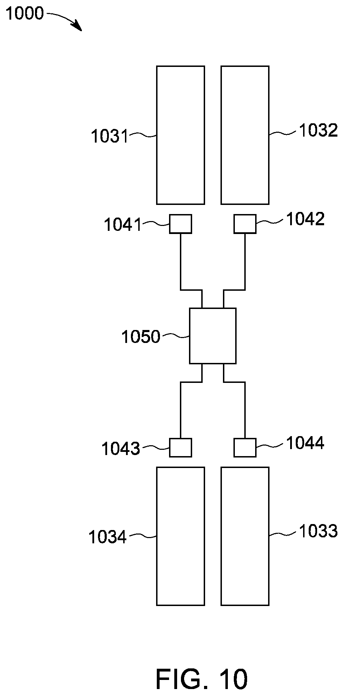

Fig. 10 illustrates a device 1000 for determining a tire condition. The device can be configured to determine the condition of at least one tire. Fig. 10 shows four tires 1031, 1032, 1033, 1034. The device 1000 is configured to sense each tire with a respective sensor 1041, 1042, 1043, 1044. Each sensor includes a multispectral camera and a TOF sensor. The device 1000 can include a processor 1050 which is communicatively coupled to the sensor(s). The processor can be configured to determine the tire condition(s) according to the methods disclosed herein. The device 1000 can have additional processors, such as at the sensors 1041, 1042, 1043, 1044. The device 1000 can have a memory, such as a memory that stores reference edge counts and/or other reference data such as curves described herein. Alternatively/additionally, reference edge counts can be determined by remote data such as data on a network.

The method of determining tire condition can alternatively/additionally be performed with mobile devices, such as a smartwatch, tablet, or smart phone. The device can have a processor configured to determine the tire condition(s) according to the methods disclosed herein. The device can include a multispectral camera and TOF sensor. Alternatively/additionally, the mobile device, such as the processor thereof, can be configured to communicatively couple to a TOF sensor and/or multispectral camera. The device may be programmed to execute the method of determining tire condition as described herein, such as with an app.

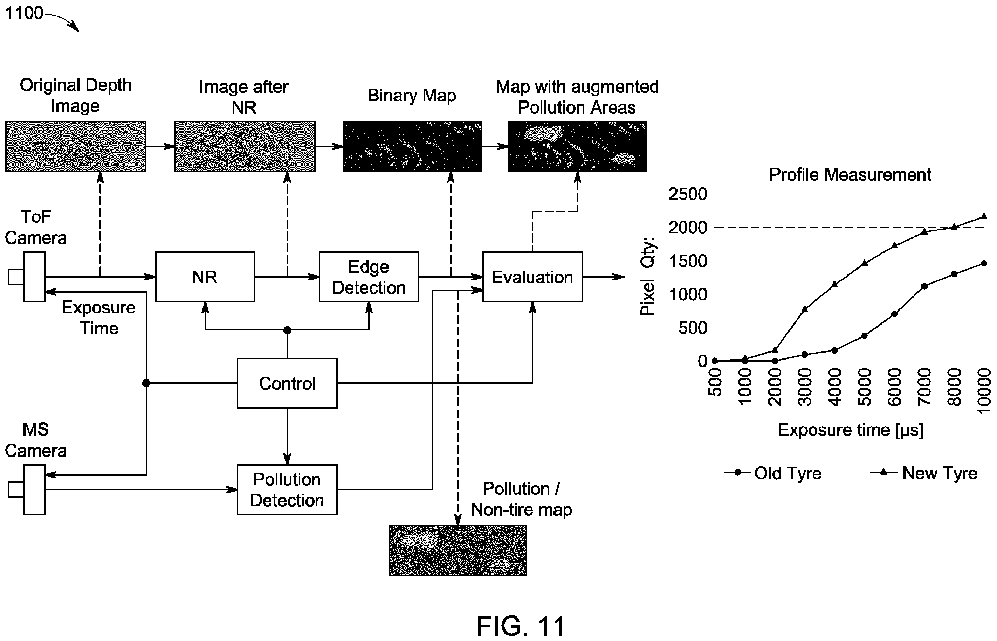

Fig. 11 illustrates a block diagram 1100 for illustrating a method/device for determining tire condition. A TOF camera and multispectral camera are shown. The TOF camera can collect images at variable exposure times. An example of an original depth image is shown in Fig. 11. The original depth image can be processed, such as noise filtered, to give an image after noise reduction, as shown in Fig. 11. A binary edge map can be determined by edge detection.

The MS Camera can collect multispectral data for determination of a secondary area of the tire, *e.g.* by pollution detection. A control, such as a processor, can be communicatively coupled to the TOF camera and MS Camera. The control/processor can process the TOF images and/or multispectral data. The control/processor can determine the secondary area from the multispectral data, the secondary area being the area to be used to evaluate/determine the tire condition. In determining the secondary area, a pollution and/or non-tire area can be determined, as shown. The binary map can be augmented, *e.g*. with a mask, such as to indicate regions to ignore in determining tire condition.

The block diagram of Fig.11 can illustrate the signal processing, from collection of TOF images and/or depth images by the TOF camera and multispectral data from the MS Camera, until the evaluation of tire condition. The signal processing can be repeated for variable exposure times of the TOF camera. Fig. 11 illustrates a case in which the multispectral data is used for filtering/masking. The TOF camera can capture a TOF image and/or depth image of the tire. The TOF image and/or depth image can go through a noise reduction filter to reduce noise, followed by an edge detection filter to create a binary map containing detected edges of the tire. The block denoted by "control" can be a processor, a central processing unit, a field-programmable gate array, or the like, which can control the processing blocks shown. The Control may as well control the acquisition of at least one of the cameras.

The multispectral camera can capture an image from the same region of the tire in parallel with the MS Camera. The cameras can collect data/images synchronously, for example. The multispectral camera may aid in avoiding any miscalculation in the later evaluation of tire condition from debris, pollution, and the like on the tire covering the treads.

The spectral characteristics of the multispectral data can determine the primary area, secondary area, and/or exceptional region. The MS Camera may allow for detecting different materials based on spectral characteristics.

The MS camera and/or control can determine a mask corresponding to regions for exclusion from the tire evaluation and/or condition determination. In the evaluation block seen in Fig.11, the binary profile map can be augmented by the pollution map. After masking the exceptional area and/or determining the secondary area, *e.g.* the area for evaluation, the number of pixels in the augmented binary edge map will be counted in non-pollution areas, *e.g.* the secondary area which may exclude any debris. This procedure can be repeated for different TOF exposure times. Based on the amount of counted pixels, *e.g.* the edge count, determined at the exposure times used to collect the TOF images, an evaluation graph can be determined as explained herein. The graphs/curves shown in Fig. 11 are comparable to those curves shown in Fig. 9. Alternatively/additionally, the edge counts determined from a range of TOF exposure times, are used to determine tire condition such as tread depth.

For example, based on comparing the measured evaluation curve and/or edge counts over exposure time and a reference edge count and/or reference curve, the determination of tire condition, such as tread depth, can be made. The device/method can include an alert when a tire change is necessary. For example, when the measured curve is above a reference curve, no action is needed. For example, when the measured curve is equal or below the reference curve, action is needed and the driver can receive a notification.

The reference curve and/or reference edge count(s) can be accessible from a database, from local memory, and/or from a network, for example. The reference curve and/or reference edge count(s) can be determined, retrieved, and/or calculated when a new tire is installed. A calibration measurement can be used to determine the reference curve and/or reference edge count(s) such as immediately after a tire installation.

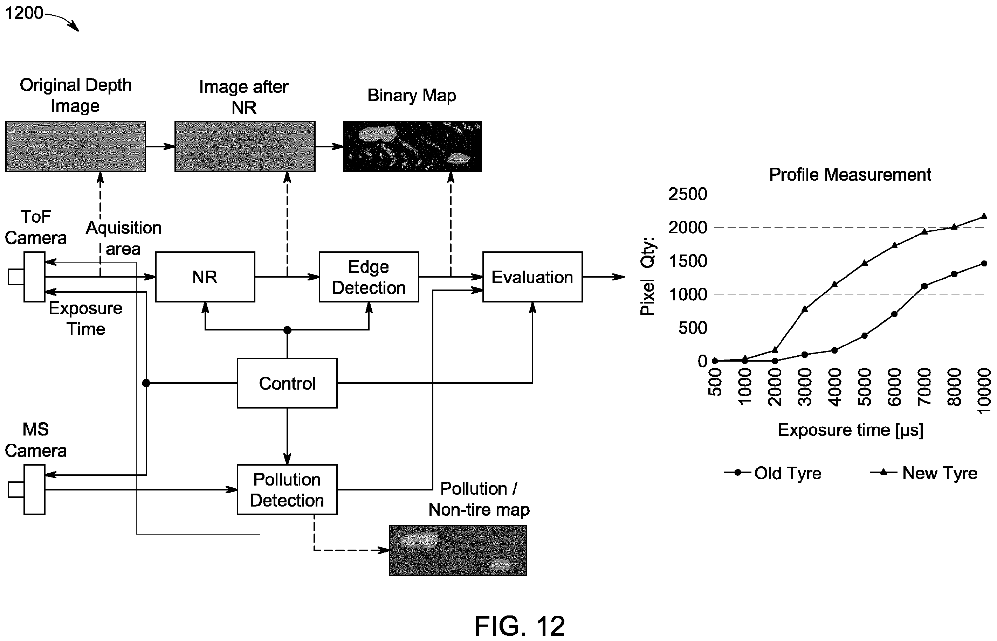

Fig. 12 illustrates a block diagram 1200 for illustrating a method/device for determining tire condition. The block diagram 1200 of Fig. 12 is based on that of Fig. 11, and its description is based on that of Fig. 11. In the example of Fig. 12, the TOF camera can be controlled by the control to collect TOF images from a secondary area of the tire as determined from the multispectral data. The TOF images and/or depth information can be, for example, acquired only in regions where the multispectral camera detected the tire surface and/or no debris.

The processing of each TOF image and/or original depth image may omit masking when the collected TOF images exclude the exceptional region(s) and/or are limited to areas of the tire where the multispectral data allows detection of the tire surface.

The methods and devices described herein can be applied to a vehicle that includes at least one tire. The device may be integrated into the vehicle. For example, before the engine is started, when the tire is not moving, the tire(s) is evaluated by any of the methods/devices described herein. In an example, the tire profile is assumed to be the same everywhere apart from some minor local deviations.

A determination of tire condition during driving is also contemplated. A real-time measurement may utilize a TOF camera that includes a laser of sufficient power to enable short exposure times for reduction of motion blur to levels that do not interfere with the determination, *e.g*. processing steps such as edge detection. Sufficient laser power may be used to avoid motion blur due to the rotating tire within a range of exposure times used for the determination of tire condition as described herein. The TOF may also have a fast acquisition time, such as an adequately fast shutter speed, to acquire images with short exposure times that are sufficient to make motion blur negligible.

The methods and/or devices described herein may operate by contactless measuring of tire condition, *e.g*. tire tread depth. The methods and/or devices described herein may operate on nonmoving or moving tires. The methods and/or devices described herein may include an alert, such as to a driver, when tread depth is less than a threshold, such as a legally required depth.

Herein, a block diagram, flow chart, a flow diagram, a state transition diagram, a pseudo code, and the like may represent various processes, operations or steps, which may, for instance, be substantially represented in transitory and/or non-transitory machine readable medium and executable by a processor or a programmable hardware, whether or not such processor or a programmable hardware is explicitly shown. Methods disclosed in the specification or in the claims may be implemented by a device having means for performing each of the respective acts of these methods.

A non-transitory computer-readable medium computer program may have a program code for, when executed on a processor, causing the execution of any of the methods described herein.

It is to be understood that the disclosure of multiple acts, processes, operations, steps or functions disclosed in the specification or claims are not to be construed to be limited in a specific order, unless explicitly or implicitly described otherwise. In some examples a described act, function, process, operation, or step may include or may be broken into multiple subordinate acts, functions, processes, operations and/or steps.

Reference numerals are given to aid in understanding and are not intended to be limiting. It will be understood that when a feature is referred to as being "connected" or "coupled" to another element, the features may be directly connected, or coupled via one or more intervening elements.

Herein, a trailing "(s)" or "(es)" indicates an optional plurality. Thus, for example, "processor(s)" means "one or more processor," "at least one processor," or "a processor and optionally more processors." Herein a slash "/" indicates "and/or" which conveys "'and' or 'or'". Thus "A/B" means "A and/or B;" equivalently, "A/B" means "at least one of A and B."

Herein, a map may be regarded as a type of image; for example, an edge map may be a type of time-of-flight image. Herein, a "depth image" can be a TOF image and/or type of TOF image.

Herein a smoothed TOF image is a type of TOF image. Herein an edge map may be considered to be a processed TOF image. Herein, tire condition can include a tread depth.

As used herein, the terms "images" and "maps" may refer to array data that is not necessarily displayed and/or rendered as a visible image. A pixel may be a data element of an image and/or map. Herein, a "pixel" can be a data element of an array which may correspond to a map or image, such as a TOF image.

Herein, "edge pixels" can be pixels and/or data elements of an edge map. Edge pixels may have a bit depth of 1 bit. Edge pixels may indicate a detection or a nondetection of an edge, for possible states 1 and 0 respectively.

Herein "masking" may be used interchangeably with "exclusion filtering."

The description and drawings are for illustration. The description is to aid the reader's understanding of the subject matter defined in the appended claims.

A list of reference numerals for convenience follows.

| | |
|---|---|
| method of determining tire condition | 100 |
| collecting multispectral data | 110 |
| determining a secondary area | 120 |
| collecting TOF images | 130 |
| determining edge maps | 140 |
| determining condition of secondary area of tire | 150 |
| | |
| deivce for determining tire condition | 200 |
| processor | 250 |
| TOF sensor | 230 |
| multispectral camera | 280 |
| TOF images | 233 |
| multispectral data | 288 |
| tire | 210 |
| tire surface | 214 |
| tread depth | 215 |
| | |
| TOF image | 401 |
| smoothed TOF image | 402 |
| edge map | 403 |
| masked edge map | 404 |
| | |
| tire | 310 |
| primary area | 301 |
| secondary area | 302 |
| exceptional region | 303 |
| | |
| TOF image | 401 |
| smoothed TOF image | 402 |
| edge map | 403 |
| masked TOF image | 404 |
| exceptional regions | 491, 492 |
| | |
| processing a TOF image | 500 |
| noise reduction | 520 |
| edge filtering | 540 |
| masking | 560 |
| | |
| old tire TOF image | 610 |
| new tire TOF image | 620 |
| old tire TOF image | 710 |
| new tire TOF image | 720 |
| | |
| old tire curve | 910 |
| new tire curve | 920 |
| reference curve | 930 |
| | |
| device for determining tire condition | 1000 |
| tire 1 | 1031 |
| tire 2 | 1032 |
| tire 3 | 1033 |
| tire 4 | 1034 |
| | |
| sensor 1 | 1041 |
| sensor 2 | 1042 |
| sensor 3 | 1043 |
| sensor 4 | 1044 |
| processor | 1050 |

## Claims

1. A method (100) of determining tire condition, wherein the tire condition includes a tread depth, the method (100) comprising:
collecting (110) multispectral data of a primary area of a tire with a multispectral camera;
determining (120) a secondary area of the tire based on the multispectral data, wherein the secondary area is a sub-area of the primary area, and wherein determining (120) the secondary area includes:
determining an exceptional region of the primary area that is coated with debris based on the multispectral data of the primary area; and
determining the secondary area to not include the exceptional region of the primary area;
collecting (130) a plurality of TOF images, wherein the plurality of TOF images are either of the primary area or the secondary area, wherein the TOF images of the primary area include the exceptional region, wherein the TOF images of the secondary area exclude the exceptional region, wherein each of the plurality of TOF images are collected at a respective exposure time of a plurality of exposure times, and wherein
the TOF images include a first image at a first exposure time and a second image at a second exposure time, the first exposure time being less than the second exposure time;
edge filtering (140) each of the TOF images to determine a plurality of edge maps; and
determining (150) the tire condition of the secondary area based on the plurality of edge maps, wherein determining (150) the tire condition of the secondary area includes:
determining a tread measure based on the edge maps and the exposure times, which includes determining a plurality of edge counts by counting the edge pixels of each edge map, wherein each edge count corresponding to a respective exposure time, and wherein the edge pixels each correspond to an edge detection by the edge filtering; and
comparing the edge count to a reference edge count for each exposure time, wherein the method (100) comprises exclusion filtering each of the plurality of TOF images and/or plurality of edge maps to exclude the exceptional region before determining the tire condition if the plurality of TOF images are of the primary area.

2. The method (100) of claim 1, wherein determining (120) the secondary area is further based on a detection of a tire surface.

3. The method (100) of claim 1 or claim 2, wherein edge filtering (140) each of the TOF images includes determining a plurality of binary edge maps, wherein each pixel of each the binary edge map is 1 bit.

4. The method (100) of any one of claims 1 to 3, wherein the reference edge count is adjusted based on the area of the exceptional region and/or the area of the secondary area.

5. A device (200) for determining a tire condition, comprising:
a multispectral camera (280),
a TOF sensor (230), and
a processor (250) communicatively coupled to the multispectral camera (280) and the TOF sensor (230), wherein
the processor (250) is configured to determine the tire condition according to the method (100) of any one of the preceding claims.

## Patentansprüche

1. Verfahren (100) zum Bestimmen eines Reifenzustands, wobei der Reifenzustand eine Laufflächentiefe einschließt, wobei das Verfahren (100) umfasst:
Aufnehmen (110) multispektraler Daten eines Primärbereichs eines Reifens mit einer Multispektralkamera;
Bestimmen (120) eines Sekundärbereichs des Reifens auf der Grundlage der multispektralen Daten, wobei der Sekundärbereich ein Unterbereich des Primärbereichs ist, und wobei das Bestimmen (120) des Sekundärbereichs einschließt:
Bestimmen einer Ausnahmeregion des Primärbereichs, die mit Ablagerung bedeckt ist, basierend auf den multispektralen Daten des Primärbereichs; und
Bestimmen, dass der Sekundärbereich die Ausnahmeregion des Primärbereichs nicht einschließt;
Aufnehmen (130) einer Vielzahl von TOF-Bildern, wobei die Vielzahl von TOF-Bildern entweder den Primärbereich oder den Sekundärbereich zeigt, wobei die TOF-Bilder des Primärbereichs den Ausnahmebereich einschließen, wobei die TOF-Bilder des Sekundärbereichs den Ausnahmebereich ausschließen, wobei jedes der Vielzahl von TOF-Bildern bei einer jeweiligen Belichtungszeit einer Vielzahl von Belichtungszeiten aufgenommen wird, und wobei die TOF-Bilder ein erstes Bild bei einer ersten Belichtungszeit und ein zweites Bild bei einer zweiten Belichtungszeit einschließen, wobei die erste Belichtungszeit kürzer ist als die zweite Belichtungszeit;
Kantenfiltern (140) jedes der TOF-Bilder, um eine Vielzahl von Kantenkarten zu bestimmen; und
Bestimmen (150) des Reifenzustands des Sekundärbereichs basierend auf der Vielzahl von Kantenkarten, wobei das Bestimmen (150) des Reifenzustands des Sekundärbereichs einschließt:
Bestimmen eines Laufflächenmaßes basierend auf den Kantenkarten und den Belichtungszeiten, einschließend das Bestimmen einer Vielzahl von Kantenanzahlen durch Zählen der Kantenpixel jeder Kantenkarte, wobei jede Kantenanzahl einer jeweiligen Belichtungszeit entspricht, und wobei die Kantenpixel jeweils einer Kantenerkennung durch die Kantenfilterung entsprechen; und
Vergleichen der Kantenanzahl mit einer Referenzkantenanzahl für jede Belichtungszeit,
wobei das Verfahren (100) das Ausschlussfiltern jedes der Vielzahl von TOF-Bildern und/oder der Vielzahl von Kantenkarten umfasst, um den Ausnahmebereich auszuschließen, bevor der Reifenzustand bestimmt wird, wenn die Vielzahl von TOF-Bildern den Primärbereich zeigt.

2. Verfahren (100) nach Anspruch 1, wobei das Bestimmen (120) des Sekundärbereichs ferner auf einem Erkennen einer Reifenoberfläche basiert.

3. Verfahren (100) nach Anspruch 1 oder 2, wobei das Kantenfiltern (140) jedes der TOF-Bilder das Bestimmen einer Vielzahl von binären Kantenkarten einschließt, wobei jedes Pixel jeder binären Kantenkarte 1 Bit beträgt.

4. Verfahren (100) nach einem der Ansprüche 1 bis 3, wobei die Referenzkantenanzahl basierend auf dem Bereich des Ausnahmebereichs und/oder dem Bereich des Sekundärbereichs angepasst wird.

5. Vorrichtung (200) zum Bestimmen eines Reifenzustands, umfassend:
eine Multispektralkamera (280),
einen TOF-Sensor (230) und
einen Prozessor (250), der kommunikativ mit der Multispektralkamera (280) und dem TOF-Sensor (230) gekoppelt ist, wobei
der Prozessor (250) konfiguriert ist, um den Reifenzustand nach dem Verfahren (100) eines der vorstehenden Ansprüche zu bestimmen.

## Revendications

1. Procédé (100) de détermination de l'état d'un pneumatique, dans lequel l'état d'un pneumatique comporte une profondeur de bande de roulement, le procédé (100) comprenant :
la collecte (110) de données multispectrales d'une zone primaire d'un pneumatique à l'aide d'une caméra multispectrale ;
la détermination (120) d'une zone secondaire du pneumatique sur la base des données multispectrales, dans lequel la zone secondaire est une sous-zone de la zone primaire, et dans lequel la détermination (120) de la zone secondaire comporte :
la détermination d'une région exceptionnelle de la zone primaire qui est recouverte de débris sur la base des données multispectrales de la zone primaire ; et
la détermination que la zone secondaire ne comporte pas la région exceptionnelle de la zone primaire ;
la collecte (130) d'une pluralité d'images TOF, dans lequel la pluralité d'images TOF concerne soit la zone primaire, soit la zone secondaire, dans lequel les images TOF de la zone primaire comportent la région exceptionnelle, dans lequel les images TOF de la zone secondaire excluent la région exceptionnelle, dans lequel chacune de la pluralité d'images TOF est collectée à un temps d'exposition respectif d'une pluralité de temps d'exposition, et dans lequel les images TOF comportent une première image à un premier temps d'exposition et une seconde image à un second temps d'exposition, le premier temps d'exposition étant inférieur au second temps d'exposition ;
le filtrage des contours (140) de chacune des images TOF pour déterminer une pluralité de cartes de contours ; et
la détermination (150) de l'état d'un pneumatique de la zone secondaire sur la base de la pluralité de cartes de bord, dans lequel la détermination (150) de l'état des pneumatiques de la zone secondaire comporte :
la détermination d'une mesure de bande de roulement sur la base des cartes de bord et des temps d'exposition, laquelle comporte la détermination d'une pluralité de décomptes de bord en comptant les pixels de bord de chaque carte de bord, dans lequel chaque décompte de bord correspondant à un temps d'exposition respectif, et dans lequel les pixels de bord correspondent chacun à une détection de bord par le filtrage de bord ; et
la comparaison du nombre de bords à un nombre de bords de référence pour chaque temps d'exposition,
dans lequel le procédé (100) comprend un filtrage d'exclusion de chacune de la pluralité d'images TOF et/ou de la pluralité de cartes de bord afin d'exclure la région exceptionnelle avant de déterminer l'état d'un pneumatique si la pluralité d'images TOF sont de la zone primaire.

2. Procédé (100) selon la revendication 1, dans lequel la détermination (120) de la zone secondaire est en outre basée sur une détection d'une surface du pneumatique.

3. Procédé (100) selon la revendication 1 ou la revendication 2, dans lequel le filtrage de bords (140) de chacune des images TOF comporte la détermination d'une pluralité de cartes de bords binaires, dans lequel chaque pixel de chaque carte de bord binaire est de 1 bit.

4. Procédé (100) selon l'une quelconque des revendications 1 à 3, dans lequel le nombre de bords de référence est ajusté en fonction de la surface de la zone exceptionnelle et/ou de la surface de la zone secondaire.

5. Dispositif (200) afin de déterminer un état d'un pneumatique, comprenant :
une caméra multispectrale (280),
un capteur TOF (230), et
un processeur (250) couplé de manière communicative à la caméra multispectrale (280) et au capteur TOF (230), dans lequel
le processeur (250) est configuré pour déterminer l'état d'un pneumatique selon le procédé (100) selon l'une quelconque des revendications précédentes.
